(19) Europäisches Patentamt / European Patent Office / Office européen des brevets

(11) **EP 2 651 621 B1**

(12) **EUROPÄISCHE PATENTSCHRIFT**

(45) Veröffentlichungstag und Bekanntmachung des Hinweises auf die Patenterteilung:
**15.10.2014 Patentblatt 2014/42**

(21) Anmeldenummer: **12761555.7**

(22) Anmeldetag: **22.08.2012**

(51) Int Cl.:
**B29C 53/54** *(2006.01)*    **B29C 65/78** *(2006.01)*

(86) Internationale Anmeldenummer:
**PCT/EP2012/066361**

(87) Internationale Veröffentlichungsnummer:
**WO 2013/026888 (28.02.2013 Gazette 2013/09)**

(54) **VORRICHTUNG UND VERFAHREN ZUM HERSTELLEN VON TUBENKÖRPERN**

DEVICE AND METHOD FOR MANUFACTURING TUBULAR BODIES

DISPOSITIF ET PROCÉDÉ DE FABRICATION DE CORPS TUBULAIRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.08.2011 EP 11178397**

(43) Veröffentlichungstag der Anmeldung:
**23.10.2013 Patentblatt 2013/43**

(73) Patentinhaber: **PackSys Global (Switzerland) Ltd. 8630 Rüti (CH)**

(72) Erfinder: **LÄUBLI, Julius CH-8640 Rapperswil (CH)**

(74) Vertreter: **Wagner, Kilian Behrmann Wagner Partnerschaftsgesellschaft mbB Patentanwälte Hegau-Tower Maggistrasse 5 (10. OG) 78224 Singen (DE)**

(56) Entgegenhaltungen:
WO-A1-01/60588       WO-A1-03/024694
WO-A1-2006/013171    JP-A- 5 250 944
JP-A- 59 230 727

**Beschreibung**

Die Erfindung betrifft eine Vorrichtung sowie ein Verfahren zur Herstellung von umfangsgeschlossenen rohrförmigen Tubenkörpern nach den Oberbegriffen der unabhängigen Ansprüche.

Aus dem Stand der Technik sind Fertigungsanlagen zur Herstellung von Tuben bekannt. Für die Herstellung von Tubenkörpern wird ein bahnförmiges Substrat durch Fördermittel, beispielsweise Rollen und/oder Walzen, in eine Förderrichtung gefördert und durch Rohrformmittel, beispielsweise durch Rollen, Walzen und/oder stationäre Umlenkbleche, zu einer Rohrform um einen zylindrischen Dorn geformt. Hierbei kontaktieren sich die beiden Randbereiche, die jeweils an eine der Längskanten der Substratbahn anschließen, in der Rohrform in einem Kontaktbereich, etwa in Form eines Überlappungsbereichs, in dem sich die beiden Randbereiche überlappen oder einer Kontaktposition, etwa in Form einer Stoßkante, bei der die beiden Längskanten des Substrates aneinander liegen (wobei im Folgenden die Begriffe "Kontaktbereich" und "Kontaktposition" als synonym und austauschbar gelten sollen). In diesem Kontaktbereich werden beispielsweise mittels einer Hochfrequenzschweißvorrichtung die beiden Randbereiche unter Bildung einer Schweißnaht miteinander verschweißt.

Durch viele unterschiedliche Einflüsse kann sich der Kontaktbereich von der durch die Schweißvorrichtung definierten Schweißposition weg verschieben, was häufig mangelhafte Tubenkörper zur Folge hat. Verläuft der Kontaktbereich neben oder nur teilweise durch den Schweißbereich, so kann dies eine mangelnde Dichtheit und/oder Druckbeständigkeit der Tubenkörper zur Folge haben.

Ein Wandern des Kontaktbereichs in Umfangsrichtung tritt beispielsweise bei Auswechslung der Substratbahn, bei inhomogen aufgerollten Substraten oder bei schwankender Zugbeanspruchung der Substratbahn auf. Um diesen störenden Positionsschwankungen entgegen zu wirken, werden Systeme verwendet, die die Position der Substratbahn quer zur Förderrichtung vor dem Umformvorgang in die Rohrform, d.h. vor dem Umformbereich, konstant zu halten versuchen. Hierfür werden z.B. Ultraschallsensoren verwendet, die mindestens eine Längskante der Substratbahn erfassen, sowie Stellmittel, z.B. in Form einer verschwenkbaren Walze, die eine Abweichung der Kantenposition von der Sollposition gegebenenfalls korrigieren können.

Diese Art der Überwachung berücksichtigt zwar punktuell die Kantenposition der Substratbahn an der Erfassungsstelle, jedoch nicht die Ausrichtung der Substratbahn also den Winkel unter dem die Substratbahn am Kantensensor vorbeiläuft, weshalb trotz Einhalten einer Sollkantenposition die Position des Kontaktbereichs an den Schweißmitteln deutlich von der Schweißposition abweichen kann. Auch werden jene Einflüsse nicht berücksichtigt, die zwischen der Position des Kantensensors und der Schweißposition auftreten. Solche Einflüsse beinhalten beispielsweise eine Fluktuation in der Bahnspannung und im Bahnverlauf, bedingt durch die Reibung zwischen dem Dorn und dem Substrat bzw. durch Schlupf des Substrats oder durch Positionsschwankungen eines Umformmittels, wie z.B. eines Formbandes. Somit kann es trotz der Kontrolle und Korrektur der Bahnposition auf eine Sollposition zu Abweichung von Kontaktbereich zu Schweißposition kommen.

Derzeit werden diese Störeinflüsse dadurch ausgeglichen, dass manuell die Sollposition der Bahnkante durch eine Bedienperson so angepasst wird, dass die Kontaktposition wieder in die Schweißposition fällt. Dies ist aufwendig, kostet Zeit (generiert somit Ausschuss) und erfordert erfahrenes Personal, welches noch dazu zeitmäßig häufig in Kontrollaufgaben eingebunden ist.

Aus der JP 59 230727 A ist außerhalb des Gebiets der Herstellung von Tubenkörpern eine Vorrichtung bekannt, die einen Filmstreifen in eine zylindrische Form umformt und in dieser Form zwei sich überlappende Kanten des Filmstreifens verschweißt. Die Vorrichtung umfasst Sensormittel, die ein Abweichen der Kanten des Filmstreifens erkennen, sowie Stellmittel, die den Filmstreifen lateral zu der Transportrichtung des Films versetzen können.

Aus der JP 5 250944 A ist eine Vorrichtung zum Ummanteln eines Metallkerns mit einem Isolationsmaterial zur Herstellung eines elektrisch leitfähigen Kabels bekannt. Die Vorrichtung umfasst einen Ultraschallsensor, der die Position einer der Kanten des Isolationsmaterials feststellt, sowie Verstellmittel, die die Umfangsposition der Kante so beeinflussen, dass diese möglichst konstant gehalten wird.

Aus der WO 03/024694 A1 ist es bekannt bei einer Vorrichtung zur Herstellung von Rohrkörpern einen Überlappungsbereich nach dem Schweißen durch einen Infrarotliniensensor auf das Einhalten eines vorgegebenen Temperaturprofils zu überprüfen, und bei Abweichungen ein Signal zur Drehung eines Formtrichters mit einem im Umformbereich angeordneten Führungskeil ausgegeben wird.

Aus der WO 2006/013171 A1 ist eine Vorrichtung zum Herstellen von Schlauchbeuteln bekannt, bei der eine Folienbahn durch eine Formschulter umgeformt wird und zwei Kanten der Folienbahn miteinander verbunden werden. Die Umfangsposition der sich überlappenden Kanten ist bei dieser Vorrichtung konstant, wobei die radiale Erstreckung der jeweiligen Kanten durch Verstellen der Position der Folienbahn vor den Umformmitteln verstellt werden kann.

Ausgehend vom dargestellten Stand der Technik liegt der Erfindung die Aufgabe zugrunde, eine Vorrichtung und ein Verfahren zur Herstellung von umfangsgeschlossenen rohrförmigen Tubenkörpern nach den Oberbegriffen der unabhängigen Ansprüche so zu verbessern, dass die Qualität der hergestellten Tuben maximiert wird und gleichzeitig der Aufwand für den reibungslosen Betrieb minimiert wird.

Die Aufgabe wird mittels einer Vorrichtung mit den Merkmalen des Patentanspruchs 1 bzw. durch ein Verfahren mit den Merkmalen des unabhängigen Verfahrensanspruchs gelöst. Vorteilhafte Weiterbildungen der Erfindung sind in den Unteransprüchen beschrieben.

Bei einer solchen Vorrichtung sind erste, bevorzugt in Förderrichtung vor dem Umformbereich und bevorzugt nahe (insbesondere mit einem Abstand in Förderrichtung geringer als 20 cm) der Stellmittel angeordnete, Sensormittel zur Erfassung der Position der Substratbahn vorgesehen. Hierdurch wird eine Regelgröße erhalten, mit der der Ablauf überwacht werden kann. Die ersten Sensormittel können die Position der Substratbahn etwa durch Erfassung mindestens einer der Längskanten und/oder der Erfassung eines sich bevorzugt endlos in Förderrichtung erstreckenden Merkmals, insbesondere einer Markierung, erfassen.

Bevorzugt umfassen die ersten Sensormittel einen Ultraschallsensor, der die Position mindestens einer Längskante des Substrates erfasst. Ultraschallsensoren eignen sich wegen ihrer geringen Störanfälligkeit. Die Längskanten des Substrates sind besonders markante Bereiche, die sich gut erfassen lassen. Weiterhin ist es denkbar mehr als einen Ultraschallsensor zu verwenden und beide Längskanten zu erfassen, wodurch eventuell eine höhere Genauigkeit erlangt wird bzw. sich Sekundärparameter, wie beispielsweise eine Substratbahnbreite, ableiten lassen.

Die Stellmittel sind bevorzugt in Förderrichtung vor dem Umformbereich und bevorzugt nahe (insbesondere mit einem Abstand in Förderrichtung geringer als 20 cm) der Stellmittel angeordnet.

Die Vorrichtung mit den Merkmalen des Hauptanspruchs ermöglicht es gegenüber dem Stand der Technik bei einer Vorrichtung nach dem Oberbegriff des Anspruch 1 Tubenkörper mit besonders hoher Qualität in hoher Effizienz herzustellen und manuelle Eingriffe von Bedienpersonal nicht mehr erforderlich zu machen. Erreicht wird dies, indem zusätzlich zweite Sensormittel, beispielsweise ein Ultraschallkantensensor und/oder optische Bilderfassungsmittel, im Umformbereich, bevorzugt auf Höhe der Rohrformmittel (also in dem Förderrichtungsabschnitt, über den sich der unmittelbare Wechselwirkungs- bzw. Kontaktbereich der Rohrformmittel mit dem Substrat erstreckt) oder in Förderrichtung nach dem Umformbereich vorgesehen sind, die zur Erfassung eines Merkmals des Substrats dienen. Unter Umformbereich ist hierbei der Bereich (Förderrichtungsabschnitt) zu verstehen, in dem das Substrat durch die Rohrformmittel aus der Bahnform heraus in die Rohrform umgeformt wird, wobei dieser Bereich im Regelfall über den unmittelbaren Wechselwirkungsbereich der Rohrformmittel mit den Substrat reicht, und zwar in Förderrichtung vor und/oder hinter die Rohrformmittel bzw. deren unmittelbaren Wechselwirkungsbereich mit dem Substrat. So umfasst der Umformbereich beispielsweise bei ein Formband umfassenden Rohrformmitteln auch den Bereich des Substrats, bei dem das Substrat durch das Formband bereits in Rohrform gelenkt wird, jedoch noch nicht in Berührung mit dem Formband getreten ist. Im Stand der Technik werden die Sensormittel augenscheinlich vor dem Umformbereich angeordnet, da die Substratlage durch die einfache Bahnform hier vermeintlich leichter zu erfassen ist und da sie für eine schnelle Regelung eine Anordnung möglichst nahe der Stellmittel als zwingend erscheint. Jedoch hat es sich bei der erfindungsgemäßen Anordnung von zusätzlichen zweiten Sensormittel im oder in Förderrichtung nach dem Umformbereich überraschend als vorteilhaft herausgestellt, dass die Einflüsse der Rohrformmittel auf die Substratlage bei der Regelung der Stellmittel mit berücksichtigt werden können.

Anhand des erfassten Merkmals kann ein Rückschluss auf die Umfangsposition des Kontaktbereichs an den Schweißmitteln und/oder ein dazu proportionaler Wert gezogen werden. Bevorzugt ist das Merkmal des Substrats die Umfangsposition des Kontaktbereichs selbst, die Position einer der Längskanten des Substrats und/oder eine Markierung auf dem Substrat. Für eine besonders genaue Ausrichtung des Kontaktbereichs an den Schweißmitteln erstreckt sich die Markierung bevorzugt endlos in Förderrichtung, sodass zu jeder Zeit Abweichungen entsprechend erfasst und korrigiert werden können.

Als ein zu erfassendes Merkmal eignen sich insbesondere die Umfangsposition des Kontaktbereichs, bei bekannten Rahmenbedingungen (insbesondere bekannter Substratbahnbreite) kann es aber auch denkbar sein die Umfangsposition einer Kante des Substrates an definierter Stelle in Förderrichtung zu erfassen, da etwa durch den Abstand (in Förderrichtung) zu den Schweißmitteln und Geometrie des Dorns indirekt die Umfangsposition des Kontaktbereichs an den Schweißmitteln ermittelt werden kann. Analog ist es denkbar eine Markierung auf dem Substrat zu erfassen, die einen definierten Abstand zu den Längskanten des Substrats aufweist. Die Rohrformmittel (Umformmittel) sind bevorzugt in Förderrichtung zumindest abschnittsweise (etwa als Umformrollen und/oder als Formband) dem Dorn vorgelagert.

Es sind erste Steuermittel vorgesehen, die die Substratbahn vor den Rohrformmitteln quer zur Förderrichtung in einer gegebenen Position halten, indem sie die Stellmittel in Abhängigkeit der Messwerte der ersten Sensormittel so ansteuern, dass sie Abweichungen von der Sollposition gegebenenfalls ausgleichen. So wird es ermöglicht, Schwankungen an der Kontaktposition aufgrund von Schwankungen in der Substratbahnposition vor den Rohrformmitteln von vornherein zu vermeiden.

Weiterhin sind zweite Steuermittel vorgesehen, die die Stellmittel in Abhängigkeit des Sensorsignals der zweiten Sensormittel so ansteuern, dass der Kontaktbereich in Umfangsrichtung in Richtung der Schweißposition gelenkt wird oder in der Schweißposition gehalten wird. Die zweiten Steuermittel können die Stellmittel mittelbar ansteuern, also etwa über die ersten Steuermittel, wobei ein Ausgangssignal der zweiten Steuermittel als Eingangssignal in die ersten Steuermittel eingeht, beispielsweise realisiert in Form einer Kaskadenregelung mit zwei Teilregelstrecken (dessen Regler durch die zweiten und ersten Steuermittel ausgebildet sein können). Alternativ ist es denkbar, dass die Steuermittel die Stellmittel unmittelbar ansteuern, also ohne weitere Steuermittel, insbesondere ohne einen weiteren (inneren) Regelkreis.

Die zweiten Steuermittel und die ersten Steuermittel wirken unter Berücksichtigung der Messwerte sowohl der zweiten Sensormittel als auch der ersten Sensormittel gemeinsam auf die Stellmittel ein, wobei bevorzugt die ersten Steuermittel auch Teil der zweiten Steuermittel sein können bzw. in diese integriert sein können, d.h. durch gemeinsame Steuermittel ausgebildet sein können, etwa in Form eines Mikrokontrollers, der anhand einer, insbesondere algorithmischen, Verknüpfung der Messwerte der zweiten und ersten Sensormittel (etwa einer gewichteten Mittelwertbildung) ein geeignetes Steuersignal an die Stellmittel ausgibt, um den Kontaktbereich in Umfangsrichtung zur Schweißumfangsposition hin zu verstellen bzw. in dieser zu halten.

Durch die Erfindung wird es ermöglicht automatisiert - ohne manuelle Eingriffe eines Bedienpersonals - den Kontaktbereich dauerhaft in der Schweißposition zu halten bzw. auf etwaige Abweichungen schneller zu reagieren. Dies reduziert den Ausschuss durch "Fehlschweißen" außerhalb des Kontaktbereichs. Generell verbessert die Erfindung die Qualität der Schweißnaht und somit der Qualität der Tuben, insbesondere deren Belastbarkeit.

Der Kontaktbereich kann hierbei beispielsweise als Überlappungsbereich der beiden Längskantenbereiche ausgebildet sein. Auch ist es denkbar, dass der Kontaktbereich als Stoßkante der beiden Längskanten des Substrates ausgebildet ist, bei der die beiden Längskanten auf gleicher Radialhöhe (um den Dorn) nebeneinander zum Liegen kommen und durch die Schweißmittel mit einander verschweißt werden, was unter dem Fachbegriff "butt welding" bekannt ist.

In den Rahmen der Erfindung fallen sämtliche Kombinationen aus zumindest zwei von in den Ansprüchen, der Beschreibung und/oder den Figuren offenbarten Merkmalen. Zur Vermeidung von Wiederholungen sollen verfahrensgemäß offenbarte Merkmale als vorrichtungsgemäß und vorrichtungsgemäß offenbarte Merkmale als verfahrengemäß offenbart und beansprucht gelten.

Es hat sich als besonders vorteilhaft herausgestellt, wenn die zweiten Sensormittel sich in Förderrichtung nahe, insbesondere in einem Abstand von weniger als 1 m, bevorzugt in einem Abstand von etwa 20 cm bis etwa 80 cm zu der Schweißposition befinden. Hierdurch können Abweichungen der Kontaktposition (bzw. des Kontaktbereichs) aufgrund des verbleibenden Laufs der Substratbahn zwischen den Stellmitteln und den Schweißmitteln ausgeglichen werden. Besonders bevorzugt sind die zweiten Sensormittel nahe der Schweißposition, beispielsweise auf in Förderrichtung auf Höhe des Dorns, und bevorzugt mit Radialabstand zum Dorn, d.h. seitlich, insbesondere oberhalb, des Dorns angeordnet.

Bevorzugt sind die Stellmittel so ausgebildet, dass sie das bevorzugt noch flache, d.h. bahnförmige, Substrat quer zur Förderrichtung und/oder in Umfangsrichtung verstellen. Hierdurch lässt sich die Einlaufposition in die Formmittel beeinflussen und somit auch die Umfangsposition des Kontaktbereichs.

In den Rahmen der Erfindung fällt es, dass die Stellmittel mindestens eine Walze umfassen, die in einem Winkelbereich um eine Schwenkachse verschwenkbar ist, die senkrecht zur Förderrichtung (Transportrichtung bzw. Flächenerstreckung) und/oder winklig zur Förderrichtung des Substrats angeordnet ist. Zum Verschwenken wird bevorzugt ein elektrischer, pneumatischer oder hydraulischer Stellantrieb verwendet. Die Walze kann sich rein passiv durch die Bewegung des Substrats mitbewegen (drehen) oder aber aktiv durch einen Antrieb rotatorisch angetrieben sein.

Weiterhin ist es denkbar, dass die ersten Steuermittel weitere Stellmittel ansteuern, die den Stellmitteln vor- oder nachgelagert sind. Hierdurch können gleichzeitig die Vorteile der aus dem Stand der Technik bekannten Regelung der Bahnkantenposition durch Sensormittel nahe der Stellmittel und die Vorteile der erfindungsgemäßen Regelung der Substratlage mit Sensormitteln im und/oder nach dem Umformbereich (welche auch die Einflüsse der Rohrformmittel auf das Substrat mit berücksichtigen) erreicht werden.

Auch besonders vorteilhaft können die zweiten und/oder die ersten Steuermittel als Regler eines Regelkreises, beispielsweise als ein PID-Regler oder als ein adaptiver Regler, ausgebildet sein, wobei besonders bevorzugt die zweiten Steuermittel als Regler eines äußeren Regelkreises ausgebildet sind, dessen Stellgröße (Ausgangssignal) als Führungsgröße (Eingangssignal bzw. Sollwert) den als Regler eines inneren Regelkreises ausgebildeten ersten Steuermitteln zugeführt wird. Durch die so hergestellte Kaskadenreglung lassen sich die Erfordernisse an die Bahnposition in Querrichtung über die Stellmittel sowohl durch die von den zweiten Sensormitteln erfassten Werte als auch durch die von den ersten Sensormitteln erfassten Werte vorteilhaft beeinflussen, wobei hierdurch effektiv durch die zweiten Steuermittel anhand der durch die zweiten Sensormitteln erfassten Messwerte die Sollposition der Substratbahn beeinflusst wird und durch die ersten Steuermittel anhand der durch die ersten Sensormittel erfassten Messwerte das Einhalten dieser Sollposition gesichert wird.

Hier kann eine Überbrückung vorgesehen sein, sodass der äußere Regelkreis (effektiv) der einzige Regelkreis ist und die zweiten Steuermittel die Stellmittel unmittelbar ansteuern, wodurch etwa in speziellen Fällen eine schnellere Reaktion auf ein Auseinanderlaufen von Schweißumfangsposition und Kontaktbereich erreicht werden kann. Weiterhin kann somit auch kurzfristig einen Defekt des inneren Regelkreises ausgeglichen werden.

Weiterhin hat es sich als vorteilhaft herausgestellt, die ersten Sensormittel so auszubilden und anzuordnen, dass sie die Breite der Substratbahn erfassen können, etwa durch Detektion beider der Längskanten der Substratbahn.

Hierdurch wird es erleichtert verschiedene Breiten von Substratbahnen einzusetzen. Insbesondere wenn als Merkmal eine Kantenposition der Substratbahn erfasst wird, ist die Breite der Substratbahn eine wesentliche Information um die Position es Kontaktbereichs (rechnerisch) zu ermitteln. Mit der Breiteninformation reicht es die Position einer der Kanten der Substratbahn zu erfassen, da die Position der anderen Kante anhand der geometrischen Rahmenbebdingungen (zusammen mit der Breiteninformation) definiert ist, sodass die zweiten Sensormittel auch nur einen Kantensensor umfassen müssen.

Bevorzugt ist den Rohrformmitteln ein länglicher, vorzugsweise zylindrischer Dorn in Förderrichtung der Substratbahn nachgelagert, wobei die Rohrformmittel bevorzugt das Substrat um den Dorn legen. Dieser ist aufgrund seiner geometrischen Formen und seiner Robustheit besonders gut für den Einsatz zum maschinellen Formen von Tubenkörpern geeignet.

Bevorzugt nach dem Verschweißen und bevorzugt nach einem Kühlvorgang kann die Rohrform durch Schneidemittel in einzelne Tubenkörper aufgeteilt werden. Als besonders für die Produktion effektiv und effizient hat es sich herausgestellt, Mittel vorzusehen, die einzelne Tubenkörper und/oder Abschnitte der Rohrform aus dem Produktionsprozess aussondern und/oder markieren können. Beispielsweise können die Tubenkörper durch Blasemittel aus ihrer Bahn blasen oder durch Kraftmittel mechanisch ausgeworfen werden, die (voraussichtlich) den Qualitätsanforderungen nicht genügen. Alternativ oder zusätzlich können einzelne Tubenkörper, beispielsweise farblich, entsprechend ihrer Qualität markiert werden.

Um eine hohe Qualität der erzeugten Tubenkörper zu gewährleisten ist es in Weiterbildung der Erfindung mit Vorteil vorgesehen, zu überwachen, ob die Umfangsposition des Kontaktbereichs in einem vorgegebenen Wertebereich (Winkelbereich) liegt und solche Tubenkörper oder Abschnitte der Rohrform auszusondern oder zu markieren, die in einen Bereich fallen, in dem der Kontaktbereich außerhalb dieser Grenze liegt und in der Folge die Schweißposition nicht vollständig mit dem Kontaktbereich zusammenfällt. In diesem Fall ist die Schweißnaht nicht optimal, wodurch die Qualitätseigenschaften der Tubenkörper, insbesondere in Hinsicht auf Druckbelastbarkeit und Beständigkeit, nicht gewährleistet werden können. Die Steuermittel steuern also in Abhängigkeit der durch die zweiten Sensormittel detektierten Umfangsposition des Kontaktbereiches die Mittel zum Aussondern und/oder Markieren an.

Ebenfalls in den Rahmen der Erfindung fällt ein Verfahren zur Herstellung von umfangsgeschlossenen, rohrförmigen Tubenkörpern, wobei eine Substratbahn in eine Förderrichtung gefördert wird und in einem Umformbereich durch Rohrformmittel in Rohrform geformt wird. Das Substrat wird in einem Kontaktbereich zwischen einer ersten und einer dazu bevorzugt parallelen zweiten Längskante durch Schweißmittel verschweißt. Die Lage der Substratbahn quer zur Förderrichtung wird beispielsweise von Stellmitteln beeinflusst. Im Umformbereich und bevorzugt in Förderrichtung weniger als 1 m, bevorzugt zwischen 0,2 m und 0,8 m vor den Schweißmitteln wird die Umfangsposition des Kontaktbereiches, vorzugsweise über dem Dorn, durch zweite Sensormittel erfasst und zweite Steuermittel steuern in Abhängigkeit des Sensorsignals der zweiten Sensormittel die Stellmittel so an, dass der von den zweiten Sensormitteln erfasste Kontaktbereich in Umfangsrichtung in Richtung der Schweißumfangsposition verstellt (gelenkt) oder in dieser gehalten wird.

Dabei wird das bahnförmige Substrat durch die Stellmittel quer zur Förderrichtung in einer Sollposition gehalten, wobei insbesondere die Sollposition in Abhängigkeit der Messwerte der zweiten Sensormittel angepasst wird. Für das Einhalten der Sollposition werden insbesondere Messwerte von ersten Sensormitteln berücksichtigt, wobei sich Ultraschallsensoren, die eine Kante der Substratbahn erfassen, als besonders vorteilhaft herausgestellt haben.

Weiterhin hat es sich als vorteilhaft herausgestellt, aus den von den Positionsmitteln erfassten Messwerten Rückschlüsse auf die Qualität der einzelnen Tubenkörper zu ziehen. Diese können entsprechend ihrer jeweiligen Qualität gesondert behandelt werden, beispielsweise sortiert, markiert und/oder ausgesondert werden.

Zum Sortieren und/oder Markieren von einzelnen Tubenkörpern oder Rohrformabschnitten werden diese in Abhängigkeit der Messwerte zu dem Zeitpunkt, an dem sie sich in an den Schweißmitteln befanden, weiterbildungsgemäß durch Aussondermittel von den restlichen Tubenkörpern getrennt. Um die Messwerte einzelnen Tubenkörpern bzw. Abschnitten der Rohrform zuordnen zu können, ist es beispielsweise möglich sowohl Tubenkörpern bzw. Abschnitten der Rohrform als auch Messwerten konkrete Zeitstempel zuzuordnen. Werden nun Messwerte in einem Zeitbereich als ungenügend beurteilt, so werden Tubenkörper bzw. Abschnitte der Rohrform mit Zeitstempeln, die in einen bestimmten Zeitbereich fallen ausgesondert, insbesondere ausgeblasen. Bevorzugt erfolgt das Aussondern mit einem zeitlichen Verzug zur Mangeldetektion, sodass sich auch solche Tubenkörper aussondern lassen, die vor dem erfassten Fehler geschweißt wurden, wodurch ein Filtern ermöglicht wird. Die Aussondermittel können beispielsweise durch Druckdüsen ausgebildet sein, die die Tubenkörper bzw. Rohrformabschnitte aus einem Standardlauf blasen, beispielsweise in Sammelbehälter.

Bevorzugt wird den einzelnen Tubenkörpern bzw. Abschnitten der Rohrform, insbesondere beim Durchlaufen der zweiten Sensormittel, individuell und/oder in einer bestimmten Frequenz ein Zeitstempel zugewiesen. Werden die Schweißverhältnisse in einem bestimmten Zeitbereich als ungenügend erkannt (weil der Kontaktbereich außerhalb eines zulässigen Bereichs detektiert wird), so können die Elemente (Tubenkörper bzw. Abschnitte der Rohrform) anhand der Zeitstempel von den Aussondermitteln ausgesondert werden. So wird beispielsweise eine Düse zu den Zeitpunkten aktiviert, in denen Elemente mit einem auszusondernden Zeitstempel an ihr vorbei laufen, und die Elemente somit gezielt ausgeblasen.

Bevorzugt ist das Substrat ein mehrschichtiges Laminat, wobei weiter bevorzugt mindestens eine Barriereschicht vorgesehen ist, die eine hohe Durchtrittssperrwirkung gegenüber Gasen und/oder Flüssigkeiten aufweist. Als Barriereschicht kann beispielsweise mindestens eine Metallfolie oder eine Metallisierung zum Einsatz kommen und/oder mindestens eine Barrierekunststoffschicht, wie beispielsweise EVOH, PA, PETG.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:

Fig. 1    eine Vorrichtung zur Herstellung von Tubenkörpern in einer Draufsicht,

Fig. 2    eine Vorrichtung zur Herstellung von Tubenkörpern gemäß Fig. 1 in einer Längsansicht,

Fig. 3    Stellmittel in einer Draufsicht,

Fig. 4    Stellmittel gemäß Fig. 3 in einer Längsansicht,

Fig. 5    beispielhafte Regelansteuerung für eine erfindungsgemäße Vorrichtung, und in

Fig. 6    Weiterbildung der Regelansteuerung aus Fig. 5.

In den Figuren sind die gleichen Elemente und Elemente mit der gleichen Funktion mit den gleichen Bezugszeichen gekennzeichnet.

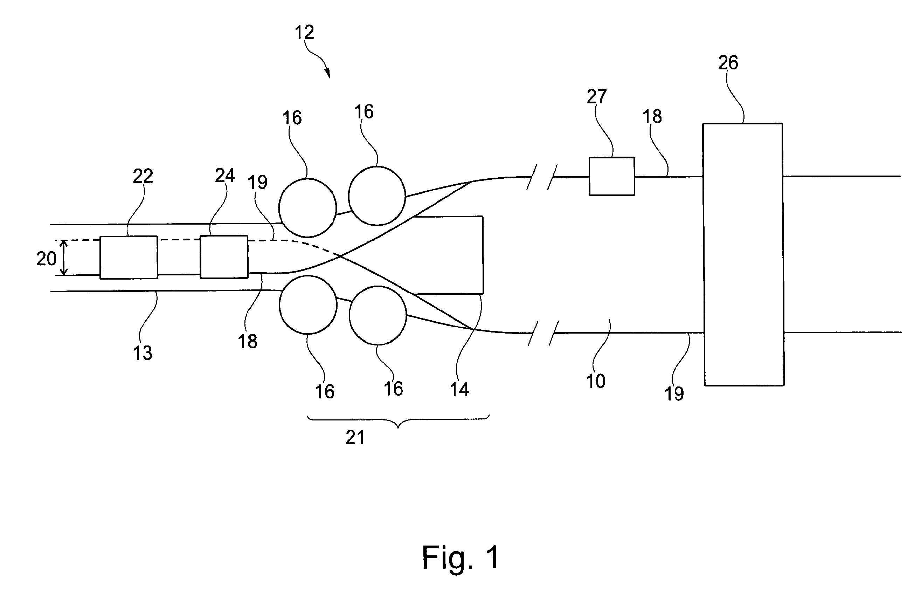

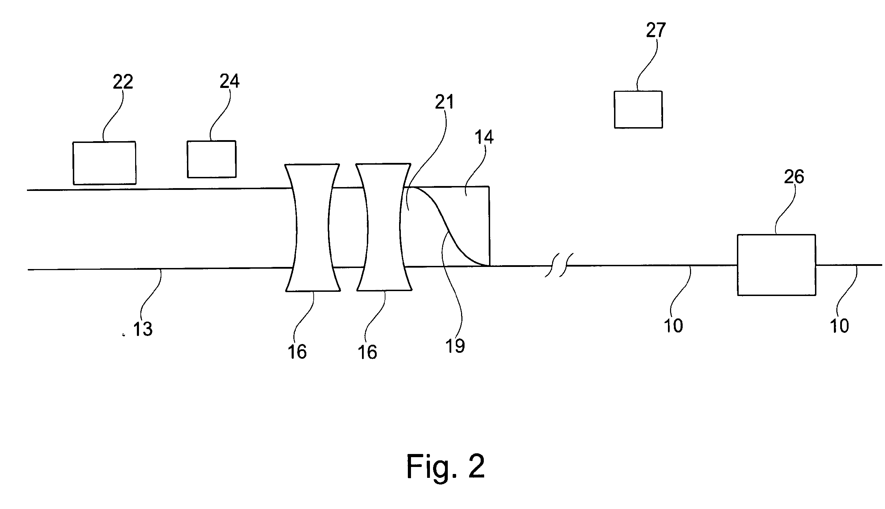

Fig.1 zeigt in einer Draufsicht eine Vorrichtung gemäß einer bevorzugten Ausführungsform der Erfindung. Fig. 2 zeigt dieselbe Vorrichtung in einer Längsansicht.

Dargestellt ist eine Substratbahn 10 mit ihren beiden zumindest abschnittsweise parallelen Längskanten 18 und 19. Die Substratbahn 10 wird durch Rohrformmittel 12 in eine Rohrform 13 um einen zylindrischen Dorn 14 geformt. Die Rohrformmittel 12 umfassen konkave Führungsrollen 16.

Beim Formvorgang bildet sich zwischen den Längskanten 18 und 19 ein Kontaktbereich 20 aus. Über dem Kontaktbereich 20 sind Schweißmittel 22, beispielsweise in Form einer Hochfrequenz-Schweißvorrichtung, sowie zweite Sensormittel 24 angeordnet.

Die zweiten Sensormittel 24 sind hier unmittelbar über dem als Überlappungsbereich ausgebildeten Kontaktbereich angeordnet, alternativ ist es jedoch auch denkbar die zweiten Sensormittel 24 kurz vor dem Kontaktbereich anzuordnen. So können die zweiten Sensormittel 24 eine der Längskanten des Substrates erfassen und anhand der Breite des Substrats und der Geometrie der Formmittel die Position dieser Kante an den Schweißmitteln ermitteln. Zur Bestimmung der Position der zweiten Längskante des Substrates im Schweißbereich kann ein konstanter Versatz angenommen werden, wobei hier bevorzugt die Breite der Substratbahn 10 vor Erreichen der Rohrformmittel 12 zum Berechnen dieses Versatzes gemessen wird. Alternativ kann die Kantenposition ebenfalls (analog zur ersten Längskante) erfasst werden.

Vor dem Formen wird die Substratbahn 10 durch Stellmittel 26 quer zur Förderrichtung (Bahnlaufrichtung bzw. Längsrichtung des Substrats) verstellt, d.h. parallel in der Flächenerstreckungsebene verschoben. Über der zweiten Kante 18 sind erste Sensormittel 27 hier in Form eines Ultraschallkantensensors angeordnet. Vorteilhaft erstrecken sich die ersten Sensormittel 27 über die gesamte Substratbahn (wie gestrichelt als 27b dargestellt), sodass sie die Breite der Substratbahn erfasst werden kann und diese als Parameter für Berechnungen (etwa die oben beschriebene rechnerische Ermittlung der Umfangsposition der ersten Längskante im Schweißbereich bei bekannter Position der zweiten Längskante) zur Verfügung steht.

Nicht gezeigt sind Steuermittel, die mit einander und den Stellmitteln 26 signalleitend verbunden sind. Diese Steuermittel können als einheitliche Steuermittel oder durch logisch getrennte erste und zweite Steuermittel (etwa mehrere Mikrokontroller) ausgebildet sein.

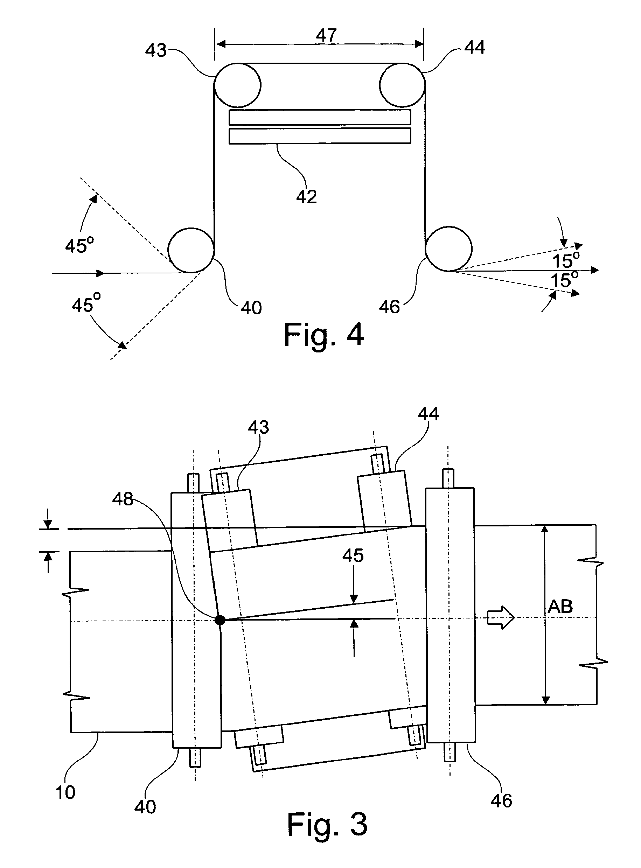

Die Substratbahn wird von in der Zeichnungsebene rechts nach links transportiert und mittels der Stellmittel 26 quer zur Förderrichtung versetzt (verschoben). Eine Ausführungsform der Stellmittel 26 (als mindestens eine in einem Drehrahmen rotatierbar gelagerte Stellwalze) ist in Fig. 3 dargestellt und wird später beschrieben.

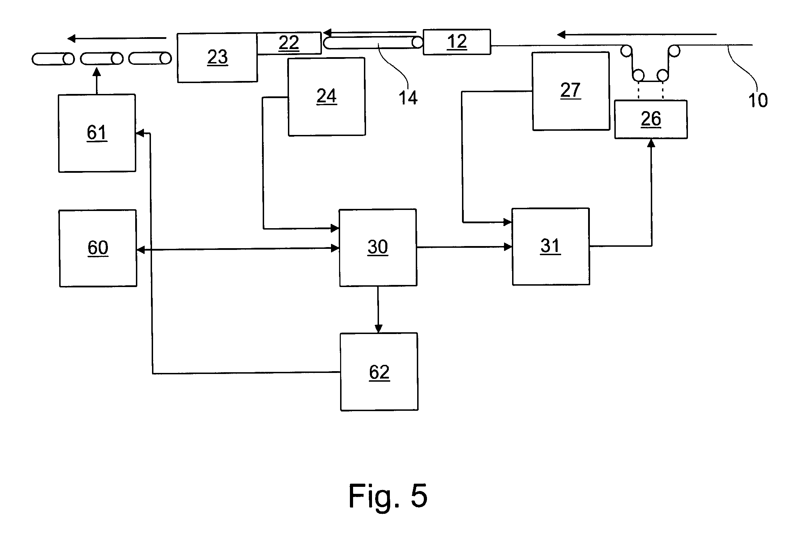

In wieweit die Bahn mittels der Stellmittel in Querrichtung (also senkrecht zur Förderrichtung) versetzt wird, wird von den Steuermitteln bestimmt. Sie sind so ausgebildet, dass sie die Stellmittel - genauer einen Stellantrieb der Stellwalze - derart ansteuern, dass diese das Substrat so verstellen, dass die Längskante 18 in einer Sollposition gehalten wird. Um Abweichungen von der Sollposition zu erkennen und entsprechend gegenzusteuern, werden die Messergebnisse der ersten Sensormittel 27 von den Steuermitteln bei der Ansteuerung der Stellmittel 26 berücksichtigt. Eine entsprechende Regelung ist beispielhaft nachstehend in Fig. 5 dargestellt und beschrieben.

Weiter bahnabwärts (d.h. in Förderrichtung) wird das bahnförmige Substrat 10 durch die Rohrformmittel 12 in eine Rohrform gebracht. Hierzu wird das Substrat durch die Führungsrollen 16 gebogen und um den zylindrischen Dorn 14 gelegt, wobei sich die beiden Randbereiche an den Längskanten 18 und 19 des Substrats kontaktieren, insbesondere überlappen bzw. aneinander stoßen, und in Umfangsrichtung zwischen sich den Kontaktbereich 20, hier in Form eines Überlappungsbereiches, einschließen. Durch die Schweißmittel 22 wird das Substrat in einem Schweißbereich mit sich selbst verschweißt, derart dass eine sich entlang der Förderrichtung der Rohrform erstreckende Schweißnaht gebildet wird, die im Idealfall mit dem Kontaktbereich zusammenfällt. Die Schweißmittel 22 sind beispielsweise durch Schweißbänder ausgebildet, die hochfrequenzbeaufschlagt werden.

Um sicher zu stellen, dass der Kontaktbereich 20 in den Schweißbereich fällt, sind die zweiten Sensormittel 24 möglichst nah an den Schweißmitteln 22 angeordnet. Sie erfassen die Position des Kontaktbereiches 20 in Umfangsrichtung. Durch den geringen Abstand zu den Schweißmitteln 22 entspricht die Position des Kontaktbereiches 20 in Umfangsrichtung an den Sensormitteln 24 möglichst genau der Position des Kontaktbereiches 20 in Umfangsrichtung an den Schweißmitteln 22.

Die erfasste Position des Kontaktbereichs 20 wird den Steuermitteln über entsprechende Signalleitungen als Sensorsignal mitgeteilt. Ist die Position des Kontaktbereiches 20 zu weit entfernt vom Zentrum des Schweißbereichs (kommt also zu nahe an dessen Rand) oder ist sie gar außerhalb des Schweißbereichs, so muss die Position der Substratbahn 10 so angepasst werden, dass der Kontaktbereich 20 wieder näher zum Zentrum des Schweißbereichs gelenkt wird. Hierzu steuern die Steuermittel die Stellmittel entsprechend an, wodurch die Substratbahn parallel versetzt wird, sodass der Kontaktbereich in Umfangsrichtung hin zum Schweißbereich wandert. Soll der Kontaktbereich beispielsweise (in Förder- bzw. Bahnrichtung betrachtet) umfänglich im Uhrzeigersinn verschoben werden, so muss die Substratbahn in Förderrichtung nach links verstellt werden. Weiterhin ist es denkbar durch den Verlauf der Position des Kontaktbereichs 20 ein "Davonlaufen" zu erkennen und diesem frühzeitig entgegen zu wirken. Eine entsprechende Regelung ist etwa in Fig. 5 beschrieben.

Fig. 3 zeigt die Stellmittel 26 in einer bevorzugten Ausführungsform in einer Draufsicht. Fig.4 zeigt dieselben Stellmittel 26 in einer Seitenansicht.

Die Stellmittel 26 umfassen eine Einlaufwalze 40, einen Drehrahmen 42, zwei Drehrahmenwalzen 43 und 44 sowie eine Fixierwalze 46. Die Walzen sind in zwei Paaren angeordnet, die sich jeweils auf einer Höhe befinden. Ein erstes Paar bilden die Einlaufwalze 40 und die Fixierwalze 46, ein zweites Paar die beiden Drehrahmenwalzen 43 und 44, die am Drehrahmen 42 angebracht sind. Der Drehrahmen 42 ist mittels eines aus Übersichtsgründen nicht dargestellten, insbesondere elektromotorischen Stellantriebs um eine senkrecht zur Förderrichtung (auf dem Drehrahmen 42) stehende Schwenkachse 48 um einen Schwenkwinkel 45 verschwenkbar. Der Drehrahmen 42 hat eine Drehrahmenlänge 47.

Die Substratbahn 10 läuft über die Einlaufwalze 40 in die Stellmittel 26 ein. Sie wird nun über den Drehrahmen 42 mit seinen Drehrahmenwalzen 43 und 44 gelenkt und verlässt schließlich über die Fixierwalze 46 die Stellmittel 26.

In Abhängigkeit vom Winkel 45 wird die Substratbahn 10 quer zu ihrer Förderrichtung versetzt. Der Zusammenhang für den Versatz ist hierbei:

$$\text{Versatz} = \text{Drehrahmenlänge} * \sin(\text{Schwenkwinkel})$$

Wird also beispielsweise ein höherer Versatz gefordert, muss der Drehwinkel 45 erhöht werden.

Die vorliegende Erfindung ist nicht auf das gezeigte Ausführungsbeispiel beschränkt. Die zweiten Sensormittel 24 können neben der gezeigten Position in Förderrichtung vor den Schweißmitteln 22 auch in Förderrichtung hinter den Schweißmitteln 22 angeordnet sein.

Insgesamt schafft es die Erfindung auf besonders vorteilhafte Weise, dass die Qualität der hergestellten Tuben maximiert wird und gleichzeitig der Aufwand für den reibungslosen Betrieb minimiert wird.

Fig. 5 zeigt einen beispielhaften Schaltungsaufbau zum Regeln der Stellmittel 26, bei dem die Steuermittel durch zweite und erste Steuermittel 30 bzw. 31 ausgebildet sind.

So ist beispielsweise ein Regelkreis (im Folgenden "innerer Regelkreis" genannt) vorgesehen, bei dem die ersten Steuermittel 31 durch einen PID-Regler ausgebildet sind und bei dem die Sollposition als Führungsgröße, die von den ersten Sensormitteln 27 erfasste Kantenposition als Regelgröße anzusehen sind. Die ersten Steuermittel 31 geben eine von der Regelabweichung (also der Differenz zwischen der Sollposition und der Kantenposition) abhängige Stellgröße an die Stellmittel 26 aus, sodass insgesamt die Kantenposition in die Sollposition geführt wird.

Um den Kontaktbereich in Umfangsrichtung (wieder) in den Schweißbereich zu lenken, kann beispielsweise ein äußerer Regelkreis vorgesehen sein, bei dem die von den zweiten Sensormitteln 24 erfasste Umfangsposition des Kontaktbereichs 20 als Regelgröße sowie ein der Umfangsposition des Schweißbereichs der Schweißmittel entsprechendes Signal als Führungsgröße den (ebenfalls) als PID-Regler ausgebildeten zweiten Steuermitteln 30 zugeführt wird, der einer Abweichung der Regelgröße von der Führungsgröße entgegenwirkt, indem er eine entsprechend Stellgröße an den inneren Regelkreis (die ersten Steuermittel 31) ausgibt, die in diesem wiederum als Führungsgröße eingeht. Hier ist es auch denkbar die Führungsgröße des äußeren Regelkreises durch eine Benutzerinteraktionseinheit 60 variabel festzulegen, welche zusätzlich noch zur Anzeige etwaiger Statusinformationen dienen kann.

Innerer und/oder äußerer Regelkreis können auch softwaremäßig in einem Mikrokontroller realisiert sein, der die Eingangssignale der beiden Sensormittel 24 und 27 entsprechend digital verarbeitet und ein geeignetes Ausgangssignal an die Stellmittel 26 ausgibt. So können die von den beiden Sensormitteln 24 und 27 erfassten Positionswerte als Eingabewerte einer Funktion und/oder eines Algorithmus dienen, die aus diesen Eingabewerten einen optimalen Positionswert der Längskante 18 der Substratbahn 10 (durch physikalisch gegebene Rahmenbedingungen und/oder durch hinterlegte, zuvor ermittelte Datensätze) ermitteln und diesen als entsprechendes elektrisches Signal an die Stellmittel 26 ausgeben.

Auch sind Ausschleusmittel 61 vorgesehen, die bei zu großer Regelabweichung an den zweiten Steuermitteln 30 nach einer zeitlichen Verzögerung (hier dargestellt durch eine Verzögerungseinheit 62) Ausschleus- und/oder Markiermittel 61 ansteuern, um möglicherweise mangelhafte Tubenkörper auszusondern und/oder zu markieren. Durch die zeitliche Verzögerung wird die Durchlaufzeit des Substrates bzw. der Tubenkörper von den zweiten Sensormitteln bis zu den Ausschleusmitteln 61 ausgeglichen.

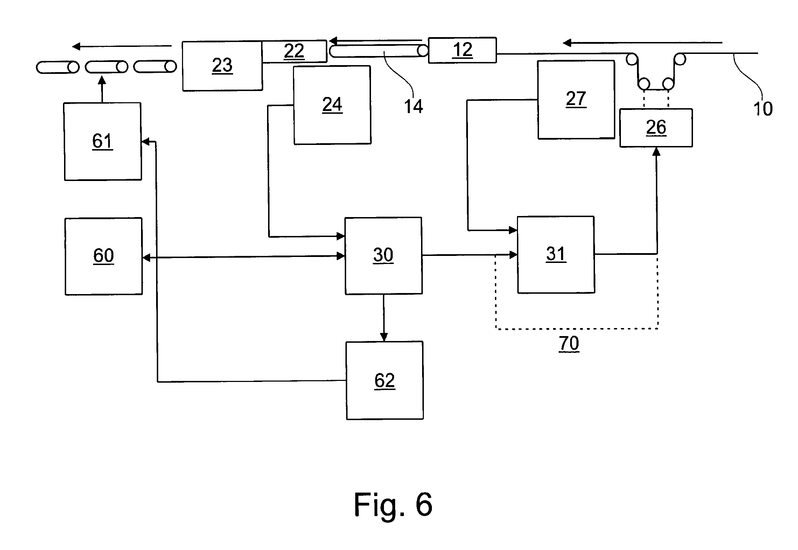

Fig. 6 erweitert den Regelaufbau aus Fig.5 dahingehend, dass der äußere Regelkreis durch eine Überbrückung 70 unmittelbar die Stellmittel 26 regeln kann, also die Stellgröße unmittelbar in die Stellmittel 26 eingeht.

Ebenso ist eine (nicht gezeigte) Ausführungsform denkbar, bei der keine ersten Steuermittel 31 vorgesehen sind, sondern die zweiten Steuermittel 30 die Stellmittel 26 immer unmittelbar ansteuern.

Bezugszeichen:

| | |
|---|---|
| 10 | Substratbahn |
| 12 | Rohrformmittel |
| 13 | Rohrform |
| 14 | Dorn |
| 16 | Führungsrollen |
| 18 | erste Längskante |
| 19 | zweite Längskante |
| 20 | Kontaktbereich |
| 21 | Umformbereich |
| 22 | Schweißmittel |
| 23 | Schneidemittel |
| 24 | zweite Sensormittel |
| 26 | Stellmittel |
| 27 | erste Sensormittel |
| 30 | zweite Steuermittel |
| 31 | erste Steuermittel |
| 40 | Einlaufwalze |
| 42 | Drehrahmen |
| 43 | Drehrahmenwalze 1 |
| 44 | Drehrahmenwalze 2 |
| 45 | Drehwinkel |
| 46 | Fixierwalze |
| 47 | Rahmenlänge |
| 48 | Schwenkachse |
| 60 | Benutzerinteraktionseinheit |
| 61 | Ausschleusmittel |
| 62 | Verzögerungseinheit |
| 70 | Überbrückung |

**Patentansprüche**

1.  Vorrichtung zur Herstellung von umfangsgeschlossenen rohrförmigen Tubenkörpern, umfassend Fördermittel zum Fördern des Substrats (10) in eine Förderrichtung,

    sowie Rohrformmittel (12), die zum Formen eines bahnförmigen, eine erste und eine zweite Längskante (18, 19) aufweisenden Substrats (10) in eine Rohrform (13) ausgebildet sind, bei welcher in Umfangsrichtung durch die erste und die zweite Längskante (18, 19) ein sich in die Förderrichtung erstreckender Kontaktbereich (20), insbesondere Stoß-oder Überlappungsbereich, gebildet oder begrenzt ist, wobei die Rohrformmittel die Umformung des Substrat (10) in die Rohrform (13) in einem Umformbereich (21) bewirken,

    sowie Schweißmittel (22) zum Schweißen der Rohrform (13) an einer Schweißumfangsposition,

    sowie in Förderrichtung vor dem Umformbereich (21), bevorzugt mit Abstand zu diesem, erste Sensormittel (27) zum Erfassen der Position der Substratbahn (10), die mindestens einen Sensor, bevorzugt Ultraschallkantensensor, umfassen, der die Position mindestens einer Längskante (18, 19) und/oder eines sich, vorzugsweise endlos, in Förderrichtung erstreckenden Merkmals des bahnförmigen Substrates (10) erfassend ausgebildet und ausgerichtet ist,

    sowie Stellmittel (26) zum Einstellen der Position der Substratbahn quer zur Förderrichtung,

    sowie erste Steuermittel (31), die die Stellmittel (26) unter Berücksichtigung der Messwerte der ersten Sensormittel (27) so ansteuernd ausgebildet sind, dass das bahnförmige Substrat (10) in einer Sollposition quer zur Förderrichtung gehalten oder dass das bahnförmige Substrat (10) in Richtung der Sollposition verstellt wird,

    sowie zweite Sensormittel (24), in Förderrichtung auf Höhe des Umformbereichs (21) oder des in Förderrichtung den Rohrformmitteln (12) nachgelagerten Bereichs, in dem das Substrat (10) bereits zur Rohrform (13) umgeformt ist,

    **dadurch gekennzeichnet,**

    **dass** zweite Steuermittel (30) vorgesehen sind, wobei die ersten und zweiten Steuermitteln (31, 30) die Stellmittel (26) gemeinsam unter Berücksichtigung der Messwerte sowohl der zweiten Sensormittel (24) als auch der ersten Sensormittel (27) so ansteuernd ausgebildet sind, dass der Kontaktbereich (20) in Umfangsrichtung in Richtung der Schweißumfangsposition verstellt wird oder dass der Kontaktbereich (20) in Umfangsrichtung in der Schweißumfangsposition gehalten wird.

2.  Vorrichtung nach Anspruch 1,
    **dadurch gekennzeichnet,**
    **dass** zweiten Steuermittel (30) die Stellmittel mittelbar über die ersten Steuermittel (31) ansteuernd ausgebildet sind.

3.  Vorrichtung nach Anspruch 1 oder 2,
    **dadurch gekennzeichnet,**
    **dass** die zweiten Sensormittel (24) zur Detektion der Umfangsposition des Kontaktbereichs (20), der Position mindestens einer der Längskanten (18, 19) und/oder einer Markierung auf dem Substrat, ausgebildet, bestimmt und angeordnet sind.

4.  Vorrichtung nach einem der vorhergehenden Ansprüche,
    **dadurch gekennzeichnet,**
    **dass** die zweiten Sensormittel (24) in Bahnrichtung in einem Abstand von weniger als 1 m, bevorzugt zwischen 0,2 m und 0,8 m vor und/oder nach den Schweißmitteln (22) angeordnet sind.

5.  Vorrichtung nach einem der vorhergehenden Ansprüche,
    **dadurch gekennzeichnet,**
    **dass** die Stellmittel (26) mindestens eine mittels eines Stellantriebs um eine senkrecht zur Förderrichtung und/oder winklig zur Förderrichtung angeordnete Schwenkachse (48) verschwenkbare Walze aufweisen.

6.  Vorrichtung nach einem der vorhergehenden Ansprüche,
    **dadurch gekennzeichnet,**
    **dass** die zweiten Steuermittel (30) als äußerer Regelkreis ausgebildet sind, dessen Stellgröße die Führungsgröße für die als innerer Regelkreis ausgebildeten ersten Steuermittel (31) dient.

7.  Vorrichtung nach einem der vorhergehenden Ansprüche,
    **dadurch gekennzeichnet,**
    **dass** die zweiten Steuermittel (30) die Stellmittel (26) unmittelbar ansteuern können, indem sie die ersten Steuermittel (31) überbrücken.

**8.** Vorrichtung nach einem der vorhergehenden Ansprüche,
**dadurch gekennzeichnet,**
**dass** die ersten Sensormittel (27) zur Erfassung der Breite des Substrats (10) ausgebildet sind, insbesondere durch Erfassung beider Längskanten (17 und 18) des Substrats (10).

**9.** Vorrichtung nach einem der vorhergehenden Ansprüche,
**dadurch gekennzeichnet,**
**dass** die zweiten Steuermittel (30) so ausgebildet sind, dass sie unter Berücksichtigung der, vorzugsweise durch die ersten Sensormittel (27) erfassten, Breite und unter Berücksichtigung der durch die zweiten Sensormittel (24) erfassten Position des Merkmals des Substrats (10) einen Rückschluss auf die Umfangsposition des Kontaktbereichs (20) in Förderrichtung auf Höhe der Schweißmittel (22) ziehen.

**10.** Vorrichtung nach einem der vorhergehenden Ansprüche,
**dadurch gekennzeichnet,**
**dass** Ausschleusmittel (61) und/oder Markierungsmittel vorgesehen sind, die einzelne Tubenkörper oder Abschnitte der Rohrform (13) aussondernd und/oder markierend ausgebildet sind, insbesondere in Abhängigkeit eines Steuersignals der zweiten und/oder ersten Steuermittel (30, 31).

**11.** Verfahren zur Herstellung von umfangsgeschlossenen rohrförmigen Tubenkörpern, bevorzugt unter Verwendung einer Vorrichtung nach einem der vorhergehenden Ansprüche,
wobei ein bahnförmiges Substrat (10) in Förderrichtung gefördert wird und in einem Umformbereich (21) in eine Rohrform (13) geformt wird und in der Rohrform (13) einen Kontaktbereich (20), insbesondere Stoß- oder Überlappungsbereich, zwischen einer ersten und einer dazu parallelen zweiten Längskante (18, 19) bildet, wobei das Substrat in Förderrichtung nach dem Umformbereich (21) in einer Schweißumfangsposition verschweißt wird, und wobei das bahnförmige Substrat (10) unter Berücksichtigung einer in Förderrichtung vor dem Umformbereich (21) erfassten Substratposition quer zur Förderrichtung in einer Sollposition gehalten wird, wobei ein Merkmal, insbesondere die Umfangsposition des Kontaktbereichs (20), die (Umfangs-)Position einer der Längskanten (18, 19) und/oder eine Markierung auf dem Substrat in Förderrichtung auf Höhe des Umformbereichs (21) oder nach dem Umformbereich (21) erfasst wird, dass anhand des erfassten Merkmals die Umfangsposition des Kontaktbereichs (20) bestimmt wird, und dass die Position des Substrats (10) quer zur Förderrichtung vor dem Umformbereich in Abhängigkeit der festgestellten Umfangsposition so verstellt wird, dass der Kontaktbereich (20) in Umfangsrichtung in Richtung der Schweißumfangsposition verstellt wird oder in Umfangsrichtung in der Schweißumfangsposition gehalten wird, indem die Sollposition in Abhängigkeit der in Förderrichtung auf Höhe des Umformbereichs (21) oder nach dem Umformbereich (21) erfassten Umfangsposition des Kontaktbereiches (20) dynamisch angepasst wird.

**12.** Verfahren nach Anspruch 11,
**dadurch gekennzeichnet,**
**dass** anhand der in Förderrichtung auf Höhe des Umformbereichs (21) oder nach dem Umformbereich (21) erfassten Umfangsposition des Kontaktbereichs (20) oder dessen Verlauf automatisiert Rückschlüsse auf die Qualität der Tubenkörper bzw. der Abschnitte der Rohrform geschlossen werden und die Tubenkörper bzw. Abschnitte der Rohrform anhand ihrer Qualität sortiert, markiert und/oder ausgesondert werden, wobei bevorzugt einzelnen Tubenkörper bzw. Abschnitten der Rohrform beim Durchlaufen der Schweißmittel (22) jeweils ein Zeitstempel zugewiesen wird, und Tubenkörper bzw. Abschnitte der Rohrform durch die anhand des Zeitstempels sortiert, markiert und/oder ausgesondert werden.

**13.** Verfahren nach Anspruch 11 oder 12,
**dadurch gekennzeichnet,**
**dass** ein Tubenkopf an ein erstes Ende des Tubenkörpers angebracht wird, bevorzugt der Tubenkörper mit einem Füllgut befüllt wird, und weiter bevorzugt anschließend das zweite Ende des Tubenkörpers verschlossen, insbesondere verschweißt wird.

**14.** Verfahren nach einem der Ansprüche 11 bis 13,
**dadurch gekennzeichnet,**
**dass** die vor dem Umformbereich (21) erfasste Substratposition durch Erfassung der Position mindestens einer Längskante (18, 19) und/oder eines, sich vorzugsweise endlos in Förderrichtung erstreckenden Merkmals erfasst wird.

**Claims**

1.  A device for manufacturing circumferentially closed cannular tube bodies, comprising
    means for conveying the substrate (10) in a conveying direction,
    along with tube shaping means (12), which are designed to form a web-shaped substrate (10) exhibiting a first and second longitudinal edge (18, 19) in a tube form (13), in which the first and second longitudinal edge (18, 19) yield or border a contact area (20) extending in the conveying direction, in particular a joint or overlap area, in the circumferential direction, wherein the tube shaping means cause the shaping of the substrate (10) into the tube form (13) in a shaping area (21),
    along with welding means (22) for welding the tube form (13) to a circumferential welding position,
    along with first sensor means (27) situated in the conveying direction in front of the shaping area (21), preferably spaced apart from the latter, for detecting the position of the substrate web (10), which encompass at least one sensor, preferably an ultrasound edge sensor, which is designed or aligned to detect the position of at least one longitudinal edge (18, 19) and/or a feature of the web-shaped substrate (10) extending in the conveying direction, preferably continuously,
    along with adjusting means (26) for adjusting the position of the substrate web transverse to the conveying direction,
    along with first control means (31) designed to actuate the adjusting means (26) taking into account the measured values of the first sensor means (27) in such a way that the web-shaped substrate (10) is held in a desired position transverse to the conveying direction or the web-shaped substrate (10) is adjusted in the direction of the desired position,
    along with second sensor means (24) situated in the conveying direction at the height of the shaping area (21) or the area following the tube shaping means (12) in the conveying direction, in which the substrate (10) has already been shaped to the tube form,
    **characterized in that**
    second control means (30) are provided, wherein the first and second control means (31, 30) are designed to actuate the adjusting means (26) jointly taking into account the measured values of both the second sensor means (24) and the first sensor means (27) in such a way that the contact area (20) is adjusted in the circumferential direction in the direction of the circumferential welding position, or that the contact area (20) is held in the circumferential welding position in the circumferential direction.

2.  The device according to claim 1,
    **characterized in that**
    the second control means (30) are designed to actuate the adjusting means indirectly by way of the first control means (31).

3.  The device according to claim 1 or 2,
    **characterized in that**
    the second sensor means (24) are designed, intended and arranged to detect the circumferential position of the contact area (20), the position of at least one of the longitudinal edges (18, 19) and/or a marking on the substrate.

4.  The device according to one of the preceding claims,
    **characterized in that**
    the second sensor means (24) are arranged in the web direction at a distance of less than 1 m, preferably of between 0.2 m and 0.8 m, before and/or after the welding means (22).

5.  The device according to one of the preceding claims,
    **characterized in that**
    the adjusting means (26) exhibit at least one roller that can be made to pivot around a swiveling axis (48) situated perpendicular to the conveying direction and/or at an angle to the conveying direction by means of an actuator.

6.  The device according to one of the preceding claims,
    **characterized in that**
    the second control means (30) are designed as an outer control circuit, whose control variable serves as the guiding variable for the first control means (31) designed as an inner control circuit.

7.  The device according to one of the preceding claims,
    **characterized in that**
    the second control means (30) can directly actuate the adjusting means (26) by bridging the first control means (31).

8. The device according to one of the preceding claims,
**characterized in that**
the first sensor means (27) are designed to acquire the width of the substrate (10), in particular by acquiring both longitudinal edges (17 and 18) of the substrate (10).

9. The device according to one of the preceding claims,
**characterized in that**
the second control means (30) are designed to infer the circumferential position of the contact area (20) in the conveying direction at the height of the welding means (22) taking into account the width preferably determined by the first sensor means (27) and taking into account the position of the feature of the substrate (10) determined by the second sensor means (24).

10. The device according to one of the preceding claims,
**characterized in that**
discharging means (61) and/or marking means are provided, and designed to sort and/or mark the individual tube bodies or sections of the tube form (13), in particular as a function of a control signal of the second and/or first control means (30, 31).

11. A method for manufacturing circumferentially closed cannular tube bodies, preferably using a device according to one of the preceding claims,
wherein a web-shaped substrate (10) is conveyed in the conveying direction and shaped in a tube form (13) in a shaping area (21), and forms a contact area (20) in the tube form (13), in particular a joint or overlap area, between a first longitudinal edge and a second one parallel thereto (18, 19), wherein the substrate is welded into a circumferential welding position in the conveying direction after the shaping area (21), and wherein the web-shaped substrate (10) is held transverse to the conveying direction in a desired position taking into account a substrate position acquired in the conveying direction before the shaping area (21),
wherein
a feature, in particular the circumferential position of the contact area (20), the (circumferential) position of one of the longitudinal edges (18, 19) and/or a marking on the substrate is acquired in the conveying direction at the height of the shaping area (21) or after the shaping area (21), that the circumferential position of the contact area (20) is determined based on the acquired feature, and that the position of the substrate (10) transverse to the conveying direction before the shaping area is adjusted as a function of the determined circumferential position in such a way that the contact area (20) is adjusted in the circumferential direction in the direction of the circumferential welding position, or held in the circumferential welding position in the circumferential direction by dynamically adjusting the desired position as a function of the circumferential position of the contact area (20) determined in the conveying direction at the height of the shaping area (21) or after the shaping area (21).

12. The method according to claim 11,
**characterized in that**
the circumferential position of the contact area (20) determined in the conveying direction at the height of the shaping area (21) or after the shaping area (21) or its progression make it possible to automatically draw inferences about the quality of the tube bodies or sections of the tube form, and to sort, mark and/or isolate the tube bodies or tube form sections based on their quality, wherein a time stamp is preferably allocated to individual tube bodies or tube form sections during passage of the welding means (22), and tube bodies or tube form sections are sorted, marked and/or isolated based on the time stamp.

13. The method according to claim 11 or 12,
**characterized in that**
a tube head is secured to a first end of the tube body, the tube body is preferably charged with a filler, and the second end of the tube body is subsequently also preferably closed, in particular welded.

14. The method according to one of claims 11 to 13,
**characterized in that**
the substrate position acquired before the shaping area (21) is ascertained by determining the position of at least one longitudinal edge (18, 19) and/or a feature preferably extending continuously in the conveying direction.

**EP 2 651 621 B1**

**Revendications**

1. Dispositif pour fabriquer des corps de tube de forme tubulaire fermés sur leur circonférence, comprenant des moyens de convoyage pour convoyer le substrat (10) dans un sens de convoyage,

ainsi que des moyens de façonnage de tube (12) qui sont configurés pour façonner un substrat (10) en forme de bande présentant un premier et un deuxième bord longitudinal (18, 19) en une forme tubulaire (13), avec lequel une zone de contact (20), notamment une zone d'aboutage ou de chevauchement, qui s'étend dans le sens du convoyage est formée ou délimitée dans le sens de la circonférence par le premier et le deuxième bord longitudinal (18, 19), les moyens de façonnage de tube réalisant le formage du substrat (10) en la forme tubulaire (13) dans une zone de formage (21),

ainsi que des moyens de soudage (22) pour souder la forme tubulaire (13) à une position circonférentielle de soudage, ainsi que des premiers moyens de détection (27), avant la zone de formage (21) dans le sens du convoyage, de préférence espacés de celle-ci, pour détecter la position de la bande de substrat (10), lesquels comprennent au moins un capteur, de préférence un capteur de bords à ultrasons, qui est configuré et orienté pour détecter la position d'au moins un bord longitudinal (18, 19) et/ou d'une caractéristique du substrat (10) en forme de bande qui s'étend, de préférence sans fin, dans le sens du convoyage,

ainsi que des moyens de positionnement (26) pour régler la position de la bande de substrat transversalement par rapport au sens du convoyage,

ainsi que des premiers moyens de commande (31) qui sont configurés pour commander les moyens de positionnement (26) en tenant compte des valeurs mesurées des premiers moyens de détection (27) de telle sorte que le substrat (10) en forme de bande soit maintenu dans une position de consigne transversalement par rapport au sens du convoyage et que le substrat (10) en forme de bande soit déplacé en direction de la position de consigne, ainsi que des deuxièmes moyens de détection (24), à hauteur de la zone de formage (21) dans le sens du convoyage ou de la zone se trouvant après les moyens de façonnage de tube (12) dans le sens du convoyage, dans laquelle le substrat (10) est déjà façonné en la forme tubulaire (13),

**caractérisé en ce**

**que** des deuxièmes moyens de commande (30) sont prévus, les premiers et deuxièmes moyens de commande (31, 30) étant configurés pour commander ensemble les moyens de positionnement (26) en tenant compte des valeurs mesurées à la fois des deuxièmes moyens de détection (24) et des premiers moyens de détection (27), de telle sorte que la zone de contact (20) dans le sens de la circonférence soit déplacée en direction de la position circonférentielle de soudage ou que la zone de contact (20) dans le sens de la circonférence soit maintenue dans la position circonférentielle de soudage.

2. Dispositif selon la revendication 1, **caractérisé en ce que** les deuxièmes moyens de commande (30) sont configurés pour commander les moyens de positionnement indirectement par le biais des premiers moyens de commande (31).

3. Dispositif selon la revendication 1 ou 2, **caractérisé en ce que** les deuxièmes moyens de détection (24) sont configurés, conçus et disposés pour la détection de la position circonférentielle de la zone de contact (20), de la position d'au moins l'un des bords longitudinaux (18, 19) etlou d'un marquage sur le substrat.

4. Dispositif selon l'une des revendications précédentes, **caractérisé en ce que** les deuxièmes moyens de détection (24) sont disposés avant et/ou après les moyens de soudage (22) à une distance inférieure à 1 m, de préférence entre 0,2 m et 0,8 m dans le sens de la bande.

5. Dispositif selon l'une des revendications précédentes, **caractérisé en ce que** les moyens de positionnement (26) présentent au moins un cylindre qui peut pivoter au moyen d'un mécanisme de positionnement autour d'un axe de pivotement (48) disposé perpendiculairement au sens du convoyage et/ou sous un angle par rapport au sens du convoyage.

6. Dispositif selon l'une des revendications précédentes, **caractérisé en ce que** les deuxièmes moyens de commande (30) sont réalisés sous la forme d'un circuit de régulation externe, dont la grandeur de commande sert de grandeur de référence pour les premiers moyens de commande (31) réalisés sous la forme d'un circuit de régulation interne.

7. Dispositif selon l'une des revendications précédentes, **caractérisé en ce que** les deuxièmes moyens de commande (30) peuvent commander directement les moyens de positionnement (26) en contournant les premiers moyens de commande (31).

8. Dispositif selon l'une des revendications précédentes, **caractérisé en ce que** les premiers moyens de détection

13

(27) sont configurés pour détecter la largeur du substrat (10), notamment en détectant les deux bords longitudinaux (18 et 19) du substrat (10).

9. Dispositif selon l'une des revendications précédentes, **caractérisé en ce que** les deuxièmes moyens de commande (30) sont configurés de telle sorte qu'ils déduisent la position circonférentielle de la zone de contact (20) dans le sens du convoyage à hauteur des moyens de soudage (22) en tenant compte de la largeur, de préférence détectée par les premiers moyens de détection (27), et en tenant compte de la position, détectée par les deuxièmes moyens de détection (24), de la caractéristique du substrat (10).

10. Dispositif selon l'une des revendications précédentes, **caractérisé en ce que** sont prévus des moyens d'éjection (61) et/ou des moyens de marquage qui sont configurés pour filtrer et/ou marquer les corps de tube ou des portions de la forme tubulaire individuels (13), notamment en fonction d'un signal de commande des deuxièmes et/ou des premiers moyens de commande (30, 31).

11. Procédé pour fabriquer des corps de tube de forme tubulaire fermés sur leur circonférence, de préférence en utilisant un dispositif selon l'une des revendications précédentes,
un substrat (10) en forme de bande étant convoyé dans un sens de convoyage et étant façonné en une forme tubulaire (13) dans une zone de formage (21) et formant dans la forme tubulaire (13) une zone de contact (20), notamment une zone d'aboutage ou de chevauchement, entre un premier et un deuxième bord longitudinal (18, 19), parallèle au premier, le substrat étant soudé dans une position circonférentielle de soudage, après la zone de formage (21) dans le sens du convoyage, et le substrat (10) en forme de bande étant maintenu transversalement par rapport au sens du convoyage dans une position de consigne en tenant compte d'une position du substrat détectée avant la zone de formage (21) dans le sens du convoyage,
une caractéristique, notamment la position circonférentielle de la zone de contact (20), la position (circonférentielle) de l'un des bords longitudinaux (18, 19) et/ou un marquage sur le substrat, étant détectée dans le sens du convoyage à hauteur de la zone de formage (21) ou après la zone de formage (21), la position circonférentielle de la zone de contact (20) étant définie à l'aide de la caractéristique détectée et la position du substrat (10) transversalement par rapport au sens du convoyage étant réglée avant la zone de formage en fonction de la position circonférentielle définie de telle sorte que la zone de contact (20) dans le sens circonférentiel soit déplacée en direction de la position circonférentielle de soudage ou soit maintenue dans le sens circonférentiel dans la position circonférentielle de soudage en adaptant dynamiquement la position de consigne en fonction de la position circonférentielle de la zone de contact (20) détectée dans le sens du convoyage à hauteur de la zone de formage (21) ou après la zone de formage (21).

12. Procédé selon la revendication 11, **caractérisé en ce que** des conclusions automatisées sur la qualité des corps de tube ou des portions de la forme tubulaire sont tirées à l'aide de la position circonférentielle de la zone de contact (20) détectée dans le sens du convoyage à hauteur de la zone de formage (21) ou après la zone de formage (21) ou de son tracé et les corps de tube ou les portions de la forme tubulaire sont triés, marqués et/ou filtrés à l'aide de leur qualité, un chronotimbre étant à chaque fois attribué de préférence aux corps de tube individuels ou aux portions de la forme tubulaire lors de la traversée des moyens de soudage (22), et les corps de tube ou les portions de la forme tubulaire étant triés, marqués et/ou filtrés à l'aide du chronotimbre.

13. Procédé selon la revendication 11 ou 12, **caractérisé en ce qu'**une tête de tube est posée sur une première extrémité du corps de tube, le corps de tube est de préférence rempli d'une matière de remplissage et encore plus de préférence la deuxième extrémité du corps de tube est ensuite fermée, notamment soudée.

14. Procédé selon l'une des revendications 11 à 13, **caractérisé en ce que** la position du substrat détectée avant la zone de formage (21) est détectée en détectant la position d'au moins un bord longitudinal (18, 19) et/ou d'une caractéristique qui s'étend, de préférence sans fin, dans le sens du convoyage.

Fig. 1

Fig. 2

47

43

44

45°

45°

42

40

46

15°

15°

Fig. 4

44

43

48

45

AB

10

40

46

Fig. 3

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 59230727 A
- JP 5250944 A
- WO 03024694 A1
- WO 2006013171 A1